# EUROPEAN PATENT APPLICATION

(11) **EP 1 164 729 A1**
(43) Date of publication of application: **19.12.2001**
(21) Application number: 00985805.1
(22) Date of filing: 20.12.2000
(51) Int. Cl.: H04J 3/00

(54) **TRANSMITTER AND TRIBUTARY INTERFACE BOARD**

(30) Priority: 20.12.1999 JP 36128799
(71) Applicant: Kabushiki Kaisha Toshiba, Tokyo 105-8001 (JP)
(72) Inventor: IWAHORI, Hitoshi, Hino-shi, Tokyo 191-0012 (JP); OTANI, Mitsuru, Meguro-ku, Tokyo 153-0044 (JP); KITAJIMA, Mototaka, Tachikawa-shi, Tokyo 190-0001 (JP)
(74) Representative: Weitzel, David Stanley
(86) International application number: JP0009046
(87) International publication number: WO0147158

(57) **Abstract**

Multiplexing/de-multiplexing sections 14, 15, 19 are respectively provided on STM-4 substrates B1, B2, STM-16 substrates C1 to C3, STM-64 substrates D1 to D3 to de-multiplex each of an STM-4 signal, STM-16 signal, STM-64 signal from a tributary transmission line LL into STM-1 signals. Then, transmission interfaces extending from the respective above substrates to time slot exchanging sections 2-0, 2-1 are all uniformed to STM-1 which is a basic transmission speed in SDH.

## Description

### Technical Field

The present invention relates to a transmission apparatus mainly in a transmission system such as an optical submarine cable system, for transmitting data and a tributary interface substrate used in the transmission apparatus and more particularly to a transmission apparatus used in a network such as SDH (Synchronous Digital Hierarchy)/SONET (Synchronous Optical Network) in which the basic transmission speed is specified and a tributary interface substrate of the transmission apparatus.

### Background Art

SDH/SONET are specifications relating to digital signal multiplexing methods. In SDH, the transmission speed of 156 Mbps (155.52 Mbps) called STM-1 (Synchronous Transfer Module-Level 1) is used as a basic unit and a speed N times the speed is defined as [STM-N]. In SONET, the transmission speed of 52 Mbps (52.84 Mbps) called OC-1 (Optical Carrier 1) is used as a basic unit and a speed N times the speed is defined as [OC-N]. In the transmission speed which is not lower than 156 Mbps and corresponds to STM-1 or OC-3, SDH and SONET can be connected to each other.

By the way, conventionally, the transmission speed of traffic transmitted via a line interface (higher-order group side) of the SDH/SONET transmission apparatus is set only at an STM-16 level at most. However, in future transmission systems, it is required to accommodate higher-speed traffic. Therefore, a transmission apparatus which can accommodate traffic having the transmission speed of STM-64 level is developed.

A transmission apparatus of STM-16 class is operated by coupling a necessary number of signals having a transmission speed of STM-1 to a tributary interface (lower-order group side). However, in a transmission apparatus of STM-64 class, the transmission capacity of a transmission line on the line-side becomes an STM-64 level. Thus, in the transmission apparatus in which transmission speeds of signals coupled to the line interface are large, requests for coupling signals having not only STM-1 but also a high transmission speed such as STM-4, STM-16, STM-64 to a tributary interface have been made.

However, if signals having different transmission speeds are input from the tributary-side to an internal portion of the apparatus, the following problem occurs.

That is, the SDH/SONET transmission apparatus has a time slot exchanging section for exchanging time slots of input signals and switching the transmission signals. The time slot exchanging section is a device having a plurality of switching elements, for making line settings by variously switching the switching elements.

If signals having different transmission speeds are directly input from the tributary-side to the internal portion of the apparatus, it is necessary to identify the transmission speeds of the signals in the time slot exchanging section. Further, in the time slot exchanging section, control for collectively switching the switching elements for respective units corresponding to the transmission speeds of the signals is required. Therefore, there occurs a problem that the processing load of the exchanging section becomes large.

Conventionally, there is almost no case wherein a substrate for processing signals of differing transmission speeds is connected on the tributary-side. If a substrate for processing signals of different transmission speeds is connected on the tributary-side, it is necessary to specifically design and develop a transmission apparatus and shelf for inputting a plurality of signals having different speeds. However, the cost of such a special design and development would be high, while still not being adaptable for future communication needs. Therefore, appropriate measures need to be taken to deal with this problem.

### Disclosure of Invention

An object of this invention is to provide a transmission apparatus and tributary interface substrate capable of accommodating interfaces of various transmission speeds, without requiring complex internal processing or being difficult to operate.

A transmission apparatus of this invention is a transmission apparatus connected to a tributary line for transmitting lower-order group signals and a line cable for transmitting higher-order group signals having the lower-order group signals multiplexed, comprising a line interface section connected to the line cable; exchanging means for switching a signal transmitted via the tributary line and a signal transmitted via the line cable with a minimum unit used when the lower-order group signals are multiplexed into the higher-order group signal; and a plurality of tributary interface sections connected to the tributary line and provided according to the transmission speed of a signal transmitted via the tributary line connected to itself; wherein the tributary interface section includes de-multiplexing means for de-multiplexing a signal received via a tributary line having a transmission speed which is N times (N is a natural number not smaller than 2) the minimum unit when the tributary line is connected, creating N-system signals each having the basic transmission speed and transmitting the same to the exchanging means.

By adopting the above measure, signals input from the tributary-side at different transmission speeds are lead into the internal portion of the transmission apparatus with a uniform basic transmission speed, as the minimum unit for multiplexing. In SDH, the minimum unit is STM-1. That is, for example, STM signals with the transmission speeds of STM-4, STM-16, STM-64 introduced from the tributary-side are respectively de-multiplexed into 4 STM-1 signals, 16 STM-1 signals, 64 STM-1 signals each other.

Therefore, signals of STM-1 level are always supplied to the exchanging means of the internal portion of the apparatus irrespective of the type of tributary-side transmission interface or of replacement or expansion of the tributary interface substrate. As a result, since the exchanging means is not required to de-multiplex the multiplexed signal, it becomes possible to prevent the internal processing of the apparatus from being complicated while preventing loads from being locally concentrated.

### Brief Description of Drawings

FIG. 1 is a system diagram showing the construction of a transmission system according to one embodiment of this invention;
FIG. 2 is a block diagram showing the construction of transmission apparatuses N1 to Nn according to a first embodiment of this invention;
FIG. 3 is a diagram showing the construction of a portion ranging from LS I/F shelves 3-1 to 3-k to time slot exchanging sections 2-0, 2-1 of FIG. 2;
FIG. 4 is a block diagram showing the construction of a unit A of FIG. 3;
FIG. 5 is a block diagram showing the construction of a unit B of FIG. 3;
FIG. 6 is a block diagram showing the construction of a unit C of FIG. 3;
FIG. 7 is a block diagram showing the construction of a unit D of FIG. 3;
FIG. 8 is a conceptual diagram showing the construction of STM-1 substrates A1 to A8 in the first embodiment of this invention;
FIG. 9 is a conceptual diagram showing the construction of the main portion of STM-4 substrates B1, B2 in the first embodiment of this invention;
FIG. 10 is a conceptual diagram showing the construction of the main portion of STM-16 substrates C1 to C3 in the first embodiment of this invention;
FIG. 11 is a conceptual diagram showing the construction of the main portion of STM-64 substrates D1 to D3 in the first embodiment of this invention;
FIG. 12 is a block diagram showing the construction of the main portion of transmission apparatuses N1 to Nn according to a second embodiment of this invention;
FIG. 13 is a block diagram more specifically showing the construction of the main portion of the transmission apparatuses N1 to Nn according to the second embodiment of this invention;
FIG. 14 is a diagram showing an example of the construction of a bit phase comparator 17 of FIG. 13;
FIG. 15 is a diagram showing another example of the construction of the bit phase comparator 17 of FIG. 13;
FIG. 16 is a diagram used for explaining the operation in the second embodiment of this invention; and
FIG. 17 is a diagram used for explaining the operation in the second embodiment of this invention.

### Best Mode for Carrying Out of the Invention

There will now be described embodiments of this invention in detail with reference to the accompanying drawings.

### (First Embodiment)

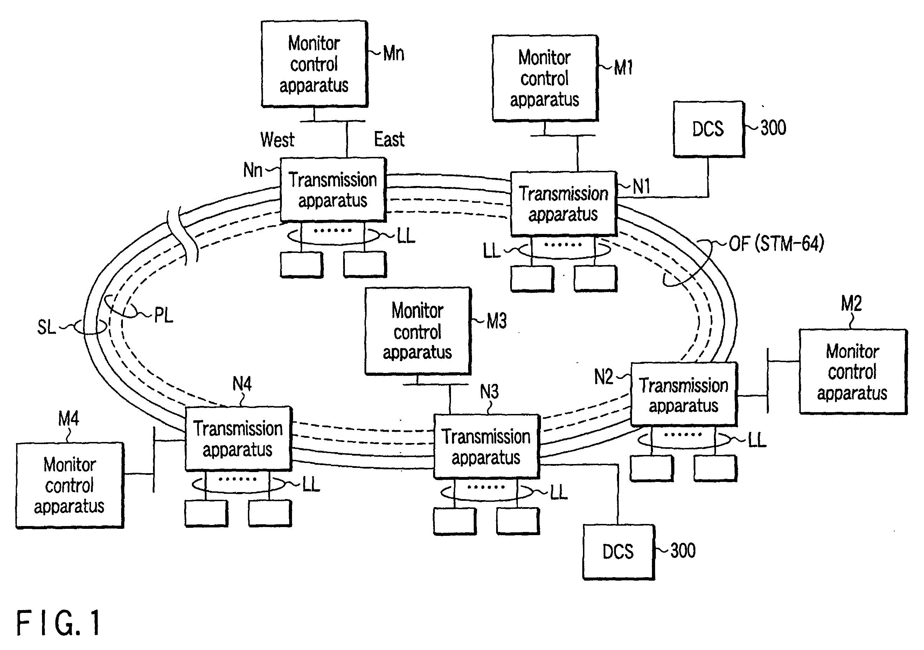

FIG. 1 is a system construction diagram of a transmission system according to one embodiment of this invention. This system includes n transmission apparatuses N1 to Nn connected in a ring form via a line cable OF. It is assumed that the transmission capacity of the line cable OF is STM-64 (Synchronous Transfer Module-Level 64) in terms of SDH.

The line cable OF includes a presently serviceable series transmission line SL and preparatory series transmission line PL and the transmission lines SL, PL respectively include a clockwise (CW: Clockwise) channel and counterclockwise (CCW: Counter Clockwise) channel.

The transmission apparatuses N1 to Nn drop a preset slot from time slots multiplexed on the STM-64 signal transmitted via the line cable OF in a time sharing fashion. The dropped slot is transmitted as a lower-order group signal to a lower-order group device (no symbol is attached thereto) such as an exchange, terminal device on the tributary-side via a tributary transmission line LL.

Further, the transmission apparatuses N1 to Nn multiplex lower-order group signals such as STM-1, STM-4, STM-16, STM-64 transmitted from the lower-order group devices via the tributary transmission lines LL on a preset time slot of the STM-64 signal.
The multiplexed signal is transmitted to another transmission apparatus. In this way, a communication path (Path) of preset transmission capacity is set between the transmission apparatuses N1 to Nn.

Further, the system of FIG. 1 includes a plurality of monitor control apparatuses M1 to Mn. The monitor control apparatuses M1 to Mn are respectively connected to the transmission apparatuses N1 to Nn via a LAN (Local Area Network). The monitor control apparatuses M1 to Mn monitor alarms or set communication paths in the network based on notification information respectively notified from the transmission apparatuses N1 to Nn. The above functions of the monitor control apparatuses M1 to Mn are realized by loading an exclusive application software on a general-purpose work station, for example.

Further, the system of FIG. 1 includes a plurality of clock supply devices (Digital Clock Supply: DCS) 300 for supplying an operation clock to the network. The transmission apparatuses N1 to Nn receive an operation clock from one of the clock supply devices 300 and are operated in synchronism with the operation clock.

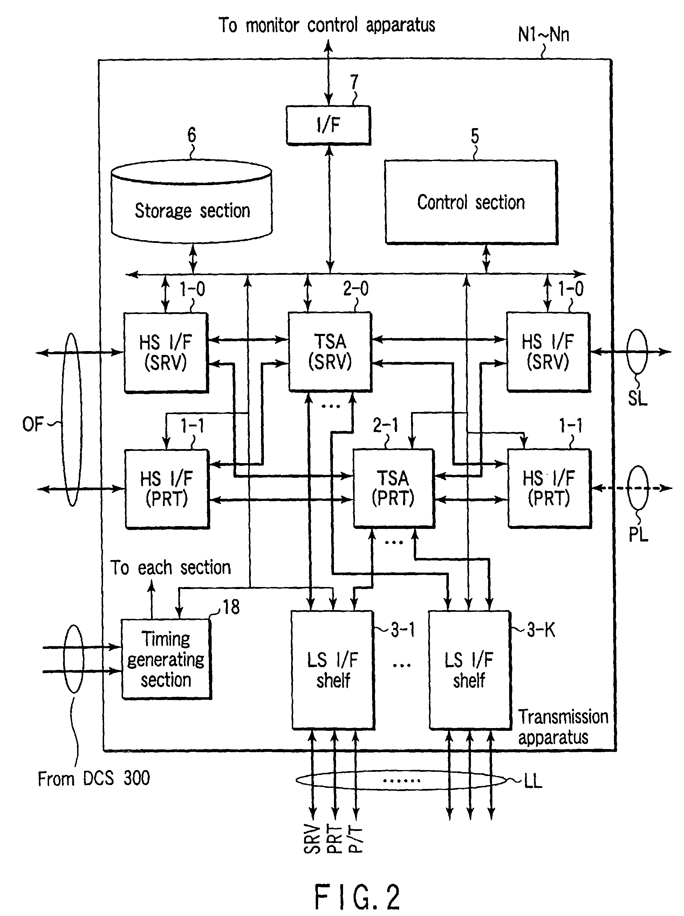

FIG. 2 is a diagram showing the construction of the transmission apparatuses N1 to Nn according to a first embodiment of this invention. In FIG. 2, a symbol 1-0 denotes a presently serviceable series line interface section (HS I/F) to which the presently serviceable series transmission line SL is connected. A symbol 1-1 denotes a preparatory series line interface section to which the preparatory series transmission line PL is connected.

The STM-64 signal lead into the internal portion of the apparatus via the presently serviceable series line interface section 1-0 and preparatory series line interface section 1-1 is supplied to a time slot exchanging section (TSA: Time Slot Assignment) 2-0 and time slot exchanging section 2-1. The time slot exchanging sections 2-0, 2-1 drop a preset time slot among the time slots multiplexed on the STM-64 signal in a time sharing fashion. The dropped slot is transmitted as a lower-order group signal from the tributary transmission line LL via tributary interface (LS I/F) shelves 3-1 to 3-k. Conversely, lower-order group signals introduced into the internal portion of the apparatus from the tributary transmission line LL via the LS I/F shelves 3-1 to 3-k are supplied to the time slot exchanging sections 2-1, 2-1, added to a preset time slot of an STM-64 frame and transmitted to another transmission apparatus via the line cable OF.

In this case, the time slot exchanging section 2-0 and time slot exchanging section 2-1 are duplicated to make a pair. The time slot exchanging section 2-0 is operated for the presently serviceable series when the system is stationary. If a defect occurs in the time slot exchanging section 2-0, the time slot exchanging section 2-1 is operated instead of the time slot exchanging section 2-0. Thus, redundancy in the apparatus can be attained.

Further, at the stationary time, the time slot exchanging section 2-1 is operated so as to be associated with transmission of part time traffic (P/T). Part time traffic carries information differing from the service traffic flowing in the presently serviceable series transmission line SL. Normally, the part time traffic has a lower priority than that of service traffic.

In addition, the transmission apparatuses N1 to Nn of FIG. 2 include a control section 5, a storage section 6 having various types of control programs stored therein, a management network interface (I/F) 7 for interfacing with the monitor control apparatuses M1 to Mn and a timing generating section 18 for supplying an operation clock to each device in the apparatus.

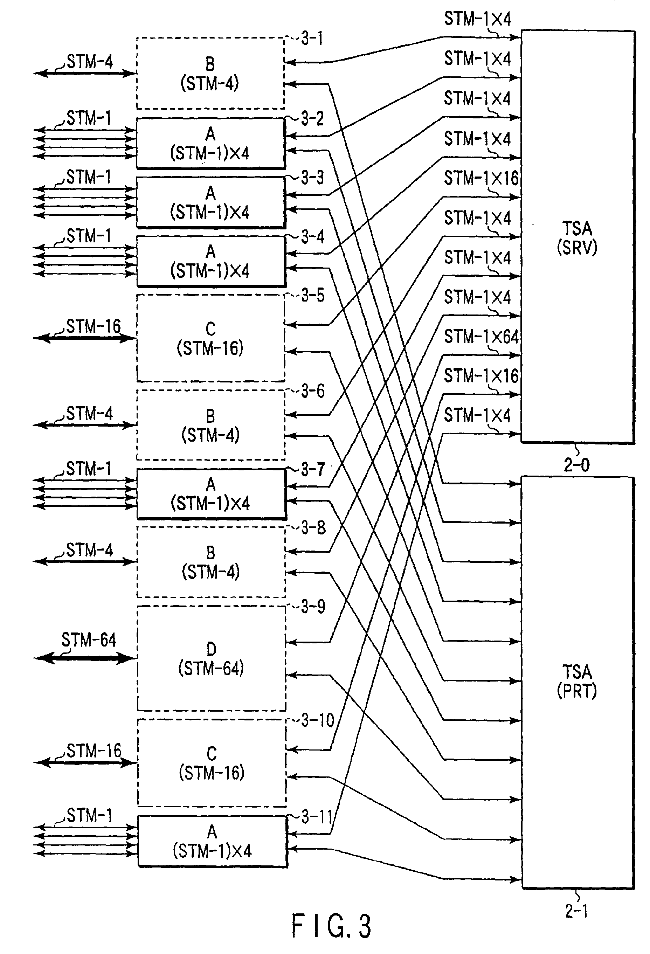

FIG. 3 is a diagram showing the construction of a portion ranging from the LS I/F shelves 3-1 to 3-k to the time slot exchanging sections 2-0, 2-1 of FIG. 2. FIG. 3 shows the state in which the transmission apparatus has eleven shelves mounted thereon, and therefore, symbols of the LS I/F shelves are denoted by 3-1 to 3-11. A plurality of types of LS I/F shelves 3-1 to 3-11 are prepared according to the transmission capacities of the tributary transmission lines LL to be connected. In this case, four types of units as a unit A, unit B, unit C and unit D are provided.

The unit A is coupled to the STM-1 signal. The unit B is coupled to the STM-4 signal. The unit C is coupled to the STM-16 signal. The unit D is coupled to the STM-64 signal. Then, the total transmission capacity of the signals coupled to the units A to D corresponds to twice STM-64 (approx. 10 Gbps), that is, approx. 20 Gbps at maximum.

In this case, the reason why the total transmission capacity of the signals coupled to the units A to D becomes twice STM-64 at maximum is that STM-64 is connected to each side of each of the transmission apparatuses N1 to Nn as shown in FIG. 1. In this connection, the clockwise direction as viewed from each of the transmission apparatuses N1 to Nn is called an East side and the counterclockwise direction is called a West side.

In FIG. 3, five units A, three units B, two units C and one unit D are provided and the total transmission capacity of the signals coupled to the units A to D is set at STM-64×2. However, the numbers of respective units and the total transmission capacity of the signals coupled to the units are not limited to this case. For example, four units A may be provided and the whole transmission capacity may be set to correspond to STM-4 or one unit B may be provided instead thereof. In short, the numbers of respective units and the total transmission capacity on the tributary-side can be arbitrarily changed within a range which does not exceed STM-64×2 according to the requirements dictated by the system design.

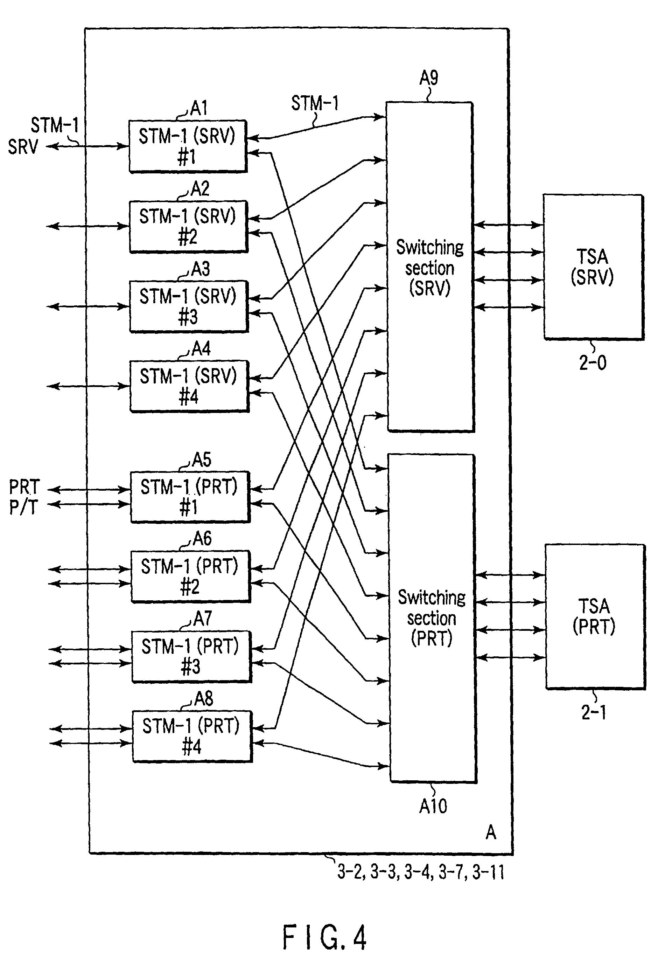

FIG. 4 is a block diagram showing the construction of the unit A, that is, LS I/F shelves 3-2, 3-3, 3-4, 3-7, 3-11. The unit A includes presently serviceable series STM-1 substrates (STM-1(SRV)) A1 to A4 for coupling of presently serviceable series (SRV) STM-1 signals from the lower-order group side, preparatory series STM-1 substrates (STM-1(PRT)) A5 to A8 for coupling of the preparatory series (PRT) and part time series (P/T) STM-1 signals from the tributary-side, presently serviceable series switching section (SRV) A9 and preparatory series switching section (PRT) A10.

Each of the presently serviceable series STM-1 substrates A1 to A4, preparatory series STM-1 substrates A5 to A8, presently serviceable series switching section A9 and preparatory series switching section A10 is realized as a substrate which can be inserted into and drawn out from the LS I/F shelves 3-2, 3-3, 3-4, 3-7, 3-11. The transmission capacity accommodated on the tributary-side can be changed by exchanging the substrates for substrates of different transmission capacities, expanding or removing the same.

Each of the substrates A1 to A8 inputs the STM-1 signal supplied from the tributary-side to the presently serviceable series switching section (SRV) A9 and preparatory series switching section (PRT) A10. The presently serviceable series switching section (SRV) A9 selectively switches the STM-1 signal from the presently serviceable series STM-1 substrates A1 to A4 or the preparatory series STM-1 substrates A5 to A8 and inputs the same to the time slot exchanging section 2-0. The preparatory series switching section (PRT) A10 selectively switches the STM-1 signal from the presently serviceable series STM-1 substrates A1 to A4 or the preparatory series STM-1 substrates A5 to A8 and inputs the same to the time slot exchanging section 2-1.

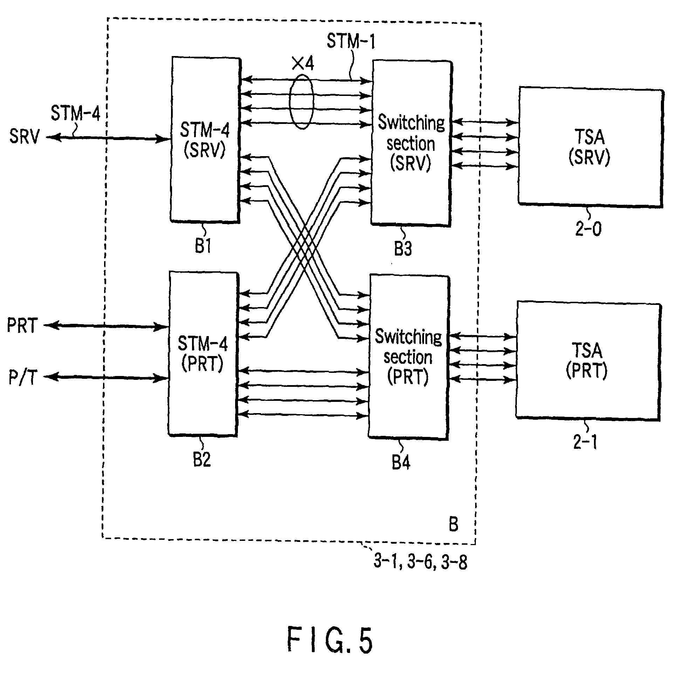

FIG. 5 is a block diagram showing the construction of the unit B, that is, LS I/F shelves 3-1, 3-6, 3-8. The unit B includes a presently serviceable series STM-4 substrate (STM-4(SRV)) B1 for coupling of a presently serviceable series STM-4 signal from the tributary-side, a preparatory series STM-4 substrate (STM-4(PRT)) B2 for coupling of preparatory series and part time series STM-4 signals from the tributary-side, presently serviceable series switching section (SRV) B3 and preparatory series switching section (PRT) B4.

Each of the presently serviceable series STM-4 substrate B1, preparatory series STM-4 substrate B2, presently serviceable series switching section B3 and preparatory series switching section B4 is realized as a substrate which can be inserted into and drawn out from the LS I/F shelves 3-1, 3-6, 3-8. The transmission capacity accommodated on the tributary-side can be changed by exchanging the substrates for substrates of different transmission capacities, expanding or removing the same.

Each of the substrates B1, B2 de-multiplexes the STM-4 signal supplied from the tributary-side into STM-1 signals of four systems and then inputs the STM-1 signals to the presently serviceable series switching section (SRV) B3 and preparatory series switching section (PRT) B4. The presently serviceable series switching section (SRV) B3 selectively switches the 4-system STM-1 signals from the presently serviceable series STM-4 substrate B1 or the preparatory series STM-4 substrate B2 and inputs the same to the time slot exchanging section 2-0. The preparatory series switching section (PRT) B4 selectively switches the 4-system STM-1 signals from the presently serviceable series STM-4 substrate B1 or the preparatory series STM-4 substrate B2 and inputs the same to the time slot exchanging section 2-1.

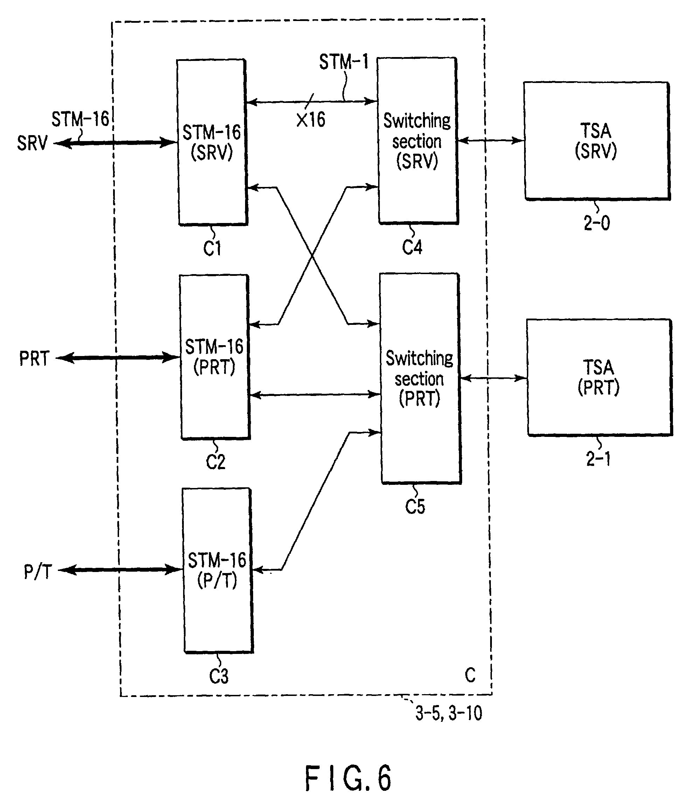

FIG. 6 is a block diagram showing the construction of the unit C, that is, LS I/F shelves 3-5, 3-10. The unit C includes a presently serviceable series STM-16 substrate (STM-16(SRV)) C1 for coupling of a presently serviceable series STM-16 signal from the tributary-side, a preparatory series STM-16 substrate (STM-16(PRT)) C2 for coupling of a preparatory series STM-16 signal from the tributary-side, part time series STM-16 substrate (STM-16(P/T)) C3 for coupling of a part time series STM-16 signal from the tributary-side, presently serviceable series switching section (SRV) C4 and preparatory series switching section (PRT) C5.

Each of the presently serviceable series STM-16 substrate C1, preparatory series STM-16 substrate C2, presently serviceable series switching section C3, preparatory series switching section C4 and part time series switching section C5 is realized as a substrate which can be inserted into and drawn out from the LS I/F shelves 3-5, 3-10. The transmission capacity accommodated on the tributary-side can be changed by exchanging the substrates for substrates of different transmission capacities, expanding or removing the same.

Each of the substrates C1 to C3 de-multiplexes the STM-16 signal supplied from the tributary-side into STM-1 signals of 16 systems and then inputs the STM-1 signals to the presently serviceable series switching section (SRV) C4 and preparatory series switching section (PRT) C5. The presently serviceable series switching section (SRV) C4 selectively switches the 16-system STM-1 signals from the presently serviceable series STM-16 substrate C1 or the preparatory series STM-16 substrate C2 and inputs the same to the time slot exchanging section 2-0. The preparatory series switching section (PRT) C5 selectively switches the 16-system STM-1 signals from the presently serviceable series STM-16 substrate C1, or the preparatory series STM-16 substrate C2 or the part time series STM-16 substrate C3 and inputs the same to the time slot exchanging section 2-1.

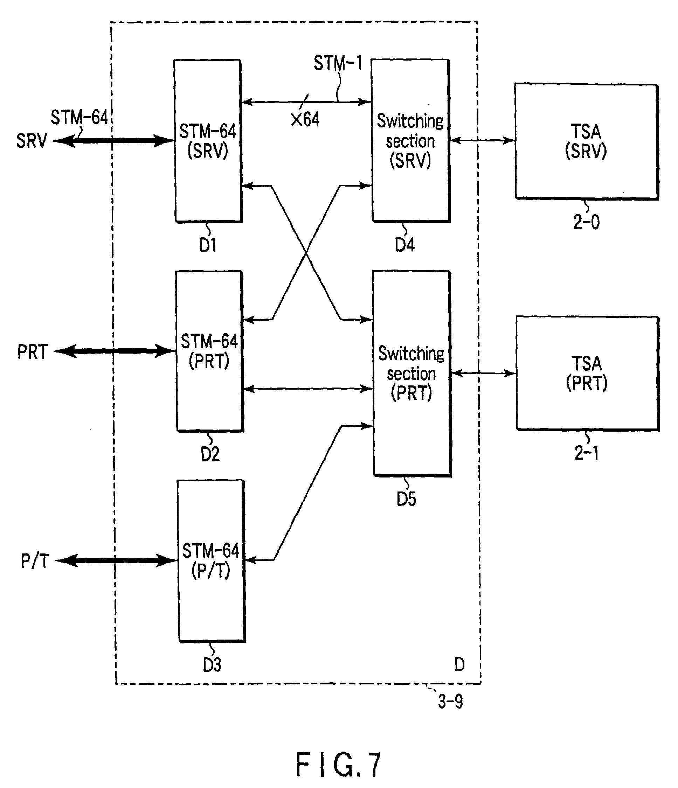

FIG. 7 is a block diagram showing the construction of the unit D, that is, the LS I/F shelf 3-9. The unit D includes a presently serviceable series STM-64 substrate (STM-64(SRV)) D1 for coupling of a presently serviceable series STM-64 signal from the tributary-side, a preparatory series STM-64 substrate (STM-64(PRT)) D2 for coupling of a preparatory series STM-64 signal from the tributary-side, part time series STM-64 substrate (STM-64(P/T)) D3 for coupling of a part time series STM-64 signal from the tributary-side, presently serviceable series switching section (SRV) D4 and preparatory series switching section (PRT) D5.

Each of the presently serviceable series STM-64 substrate D1, preparatory series STM-64 substrate D2, presently serviceable series switching section D3, preparatory series switching section D4 and part time series switching section D5 is realized as a substrate which can be inserted into and drawn out from the LS I/F shelf 3-9. The transmission capacity accommodated on the tributary-side can be changed by exchanging the substrates for substrates of different transmission capacities, expanding or removing the same.

Each of the substrates D1 to D3 de-multiplexes the STM-64 signal supplied from the tributary-side into STM-1 signals of 64 systems and then inputs the STM-1 signals to the presently serviceable series switching section (SRV) D4 and preparatory series switching section (PRT) D5. The presently serviceable series switching section (SRV) D4 selectively switches the 64-system STM-1 signals from the presently serviceable series STM-64 substrate D1 or the preparatory series STM-64 substrate D2 and inputs the same to the time slot exchanging section 2-0. The preparatory series switching section (PRT) D5 selectively switches the 64-system STM-1 signals from the presently serviceable series STM-64 substrate D1, or the preparatory series STM-64 substrate D2 or the part time series STM-64 substrate D3 and inputs the same to the time slot exchanging section 2-1.

In the above explanation, the flow of signals from the tributary-side to the internal portion of the apparatus is described, but signals from the internal portion of the apparatus to the tributary-side follow paths opposite to those described above.

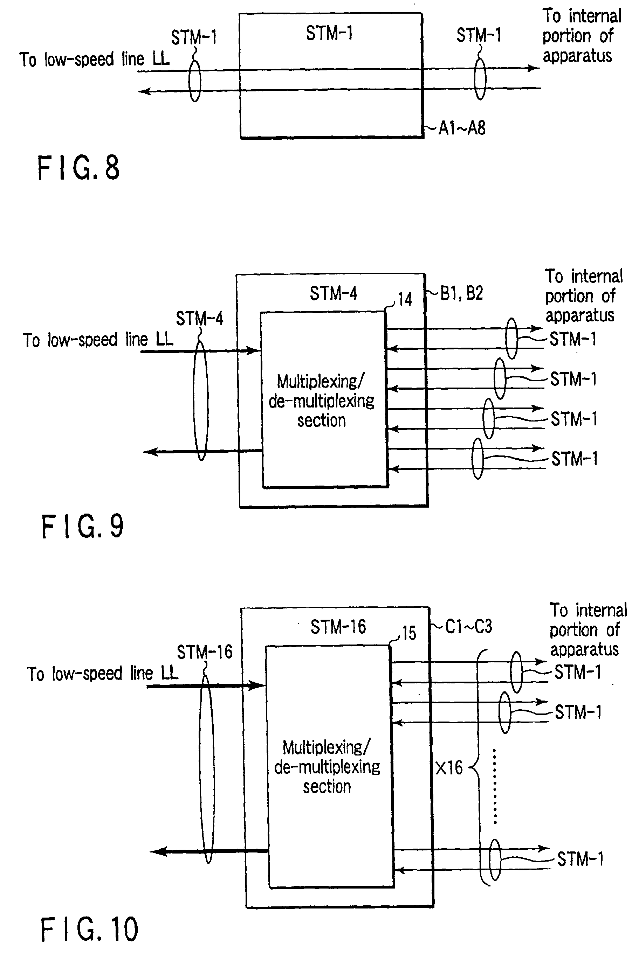

Next, the STM-1 substrates A1 to A8, STM-4 substrates B1, B2, STM-16 substrates C1 to C3, STM-64 substrates D1 to D3 in this embodiment are explained. In this case, STM-1 substrates, ···, STM-64 substrates are generally described without making any distinction between the presently serviceable series, preparatory series and part time series. The STM-1 substrates A1 to A8 are explained with reference to the conceptual diagram of FIG. 8. As shown in FIG. 8, the degree of multiplexing of signals is not changed between the tributary transmission line LL and the internal portion of the apparatus on both sides of the STM-1 substrates A1 to A8.

On the other hand, the STM-4 substrates B1, B2 of this embodiment include a multiplexing/de-multiplexing section 14 as shown in FIG. 9, de-multiplex an STM-4 signal from the tributary transmission line LL into 4-system STM-1 signals by the multiplexing/ de-multiplexing section 14 and draw the same into the internal portion of the transmission apparatus in this condition. Further, the STM-4 substrates B1, B2 multiplex the 4-system STM-1 signals from the internal portion of the apparatus into an STM-4 signal and transmit the same to the tributary transmission line LL.

Likewise, the STM-16 substrates C1 to C3 of this embodiment include a multiplexing/de-multiplexing section 15 as shown in FIG. 10. Then, the STM-16 substrates C1 to C3 de-multiplex an STM-16 signal from the tributary transmission line LL into 16-system STM-1 signals by the multiplexing/de-multiplexing section 15 and draw the same into the internal portion of the transmission apparatus in this condition. Further, the STM-16 substrates C1 to C3 multiplex the 16-system STM-1 signals from the internal portion of the apparatus into an STM-16 signal and transmit the same to the tributary transmission line LL.

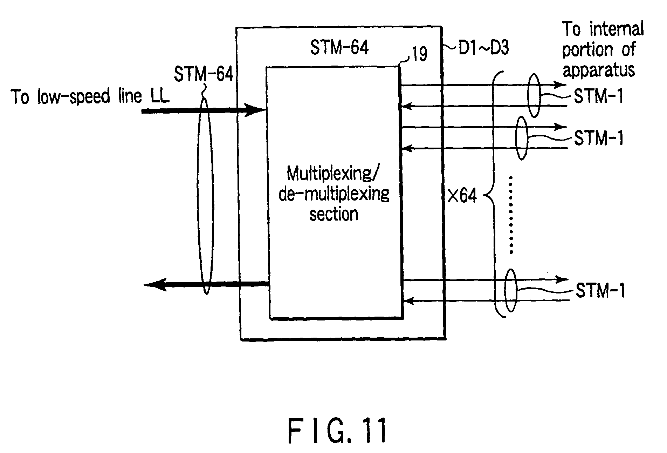

Likewise, the STM-64 substrates D1 to D3 of this embodiment include a multiplexing/de-multiplexing section 19 as shown in FIG. 11. Then, the STM-64 substrates D1 to D3 de-multiplex an STM-64 signal from the tributary transmission line LL into 64-system STM-1 signals by the multiplexing/de-multiplexing section 19 and draw the same into the internal portion of the transmission apparatus in this condition. Further, the STM-64 substrates D1 to D3 multiplex the 64-system STM-1 signals from the internal portion of the apparatus into an STM-64 signal and transmit the same to the tributary transmission line LL.

Thus, in this embodiment, the multiplexing/ de-multiplexing sections 14, 15, 19 are respectively provided for the STM-4 substrates B1, B2, STM-16 substrates C1 to C3, STM-64 substrates D1 to D3, the STM-4 signal, STM-16 signal, STM-64 signal from the tributary transmission line LL are de-multiplexed by the multiplexing/de-multiplexing sections 14, 15, 19 before they are drawn into the internal portion of the apparatus and STM-1 signals of a number corresponding to the multiplexing level are created. Then, the interface between the STM-1 substrates A1 to A8 and the switching sections A9, A10, the interface between the STM-4 substrates B1, B2 and the switching sections B3, B4, the interface between the STM-16 substrates C1 to C3 and the switching sections C4 to C5, the interface between the STM-64 substrates D1 to D3 and the switching sections D1 to D2 are all uniformed to STM-1 which is the basic transmission speed in SDH. Further, the interfaces between the switching sections A9, A10, switching sections B3, B4, switching sections C4 to C5, switching sections D4 to D5 and the time slot exchanging sections 2-0, 2-1 are all uniformed to STM-1 which is the basic transmission speed in SDH.

By thus making the construction, even if the transmission speed accommodated on the tributary-side is changed in any manner by replacing or expanding the STM-1 substrates A1 to A8, STM-4 substrates B1, B2, STM-16 substrates C1 to C3, STM-64 substrates D1 to D3, it is always only required for the time slot exchanging sections 2-0, 2-1 to process signals at the STM-1 level.

Therefore, it becomes possible to accommodate interfaces of different transmission speeds on the tributary-side without imposing an excessive processing load on the time slot exchanging sections 2-0, 2-1. As a result, it becomes possible to accommodate interfaces of variously transmission speeds on the tributary-side without causing the complexity in the internal process in the transmission apparatus.

Further, according to the transmission apparatus of this embodiment, since accommodation of different speeds is coped with by providing the multiplexing/ de-multiplexing section in the substrate on the tributary-side, it becomes unnecessary to specifically develop a transmission apparatus or shelf for accommodating different speeds. Therefore, the future communication needs can be flexibly coped with without increasing the cost.

Further, according to the transmission apparatus of this embodiment, since the speed of the interface from the substrate on the tributary-side to the time slot exchanging sections 2-0, 2-1 is uniformed, the setting operation at the time of replacement, expansion, removal of the substrate can be simplified. As a result, operation of the apparatus can be simplified and the time taken for replacement, expansion, removal of the substrate can be reduced.

Further, this invention is not limited to the first embodiment.

For example, in this embodiment, STM-1 is set as the basic transmission speed, but STM-0 (1/3 the transmission speed of STM-1: corresponding to 52 Mbps) standardized by the TTC (Telegraph & Telephone Technical Committee) is specified in Japan and this may be used as the basic transmission speed.

Further, the idea associated with the construction disclosed in the above embodiment can be applied to SONET in the same manner. Incidentally, the basic transmission speed of SONET is OC-1 corresponding to the transmission speed which is 1/3 of STM-1.

### (Second Embodiment)

Next, a second embodiment of this invention is explained. In the following drawing, portions which are common to FIG. 1 to FIG. 11 are denoted by the same symbols and only different portions are explained here.

In the conventional transmission apparatus, if an interface substrate on the tributary-side is exchanged or expanded, it becomes necessary to re-set or change the operational condition of the transmission apparatus according to the transmission speed of the substrate at the time of exchange or expansion. Since the operational condition of the transmission apparatus must be manually set in the conventional transmission apparatus, this operation involves an extremely complicated operation, which is problematic.

Further, in the SDH/SONET transmission apparatus, it is important to equalize the phases of signals input to the time slot exchanging section. In the conventional transmission apparatus, variable delay units are provided on the signal input side of the time slot exchanging section and the phases of the individual signals are equalized by respectively adjusting the delay amounts of the respective variable delay units.

However, if the number of substrates attached on the tributary-side is increased and the transmission speeds of signals processed by the respective substrates are different, variable delay units of a number corresponding to the number of different ones are required. Therefore, there occurs a problem that the apparatus line construction becomes complicated. Further, in the conventional transmission apparatus, it is necessary to individually and manually set the phase delay amounts of the respective delay units, the labor for the operation is complicated, which increases the burden on the operator.

Further, since the above manual setting is required whenever expansion/replacement of the substrate of the tributary interface takes place, the burden of the operation is further increased. Because of this, certain measures have been taken to overcome the above problems and have resulted in the transmission apparatus and tributary interface substrate of this embodiment.

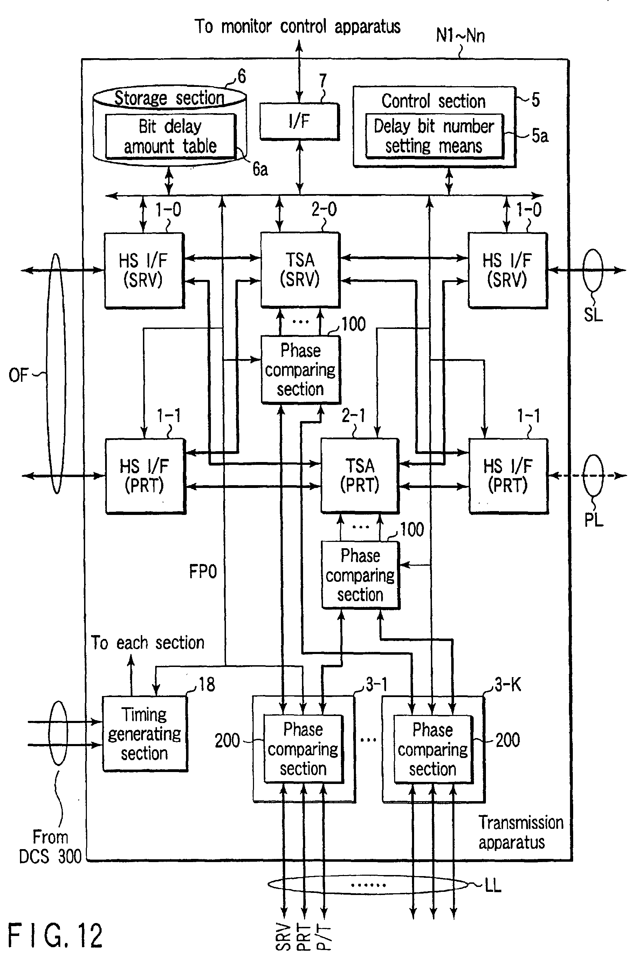

In FIG. 12, the construction of the main portions of transmission apparatuses N1 to Nn relating to this embodiment is shown. The transmission apparatuses N1 to Nn of this embodiment include delay bit number setting means 5a in a control section 5 as a new control function relating to this invention. The delay bit number setting means 5a is realized as a software operated based on a program stored in a storage section 6.

The transmission apparatuses N1 to Nn of FIG. 12 include phase comparing sections 100 in intermediate portions of signal paths extending from LS I/F shelves 3-1 to 3-k to a time slot exchanging section 2-0 and time slot exchanging section 2-1. Further, the transmission apparatuses N1 to Nn of FIG. 12 include phase control sections 200 in the respective LS I/F shelves 3-1 to 3-k. The phase comparing sections 100 and phase control sections 200 are supplied with a frame pulse FP0 from a timing generating section 18.

The timing generating section 18 reproduces an operation clock for the transmission apparatuses N1 to Nn based on a sync clock supplied from DCS and supplies the clock to each device of the transmission apparatuses N1 to Nn. Further, the timing generating section 18 creates a reference frame pulse FP0 of 8 kHz period in an SDH format from the above sync clock and supplies the reference frame pulse FP0 to the LS I/F shelves 3-1 to 3-k, bit phase comparator 17, time slot exchanging sections 2-0, 2-1.

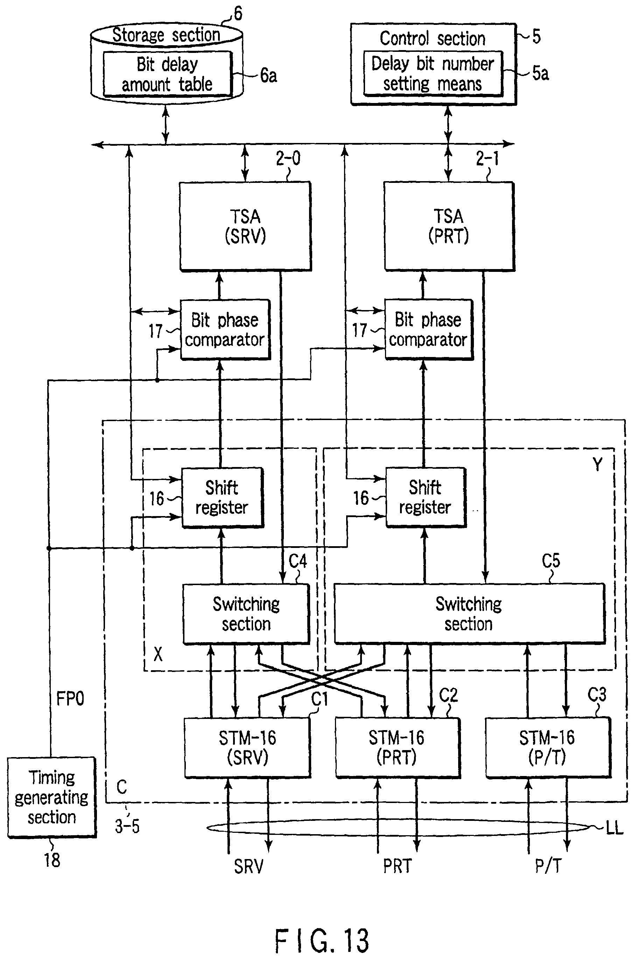

FIG. 13 is a block diagram more concretely showing the transmission apparatuses N1 to Nn of FIG. 12. The phase comparing section 100 of FIG. 12 is realized as a bit phase comparator 17 of FIG. 13, for example. The phase control section 200 of FIG. 12 is realized as a shift register 16 of FIG. 13, for example. Further, FIG. 13 is a drawing drawn in correspondence to the LS I/F shelf 3-5 of FIG. 2, FIG. 3, but other LS I/F shelves are formed with similar constructions.

The LS I/F shelf 3-5 of FIG. 13 includes STM-16 substrates C1 to C3, switch substrate X and switch substrate Y. The substrates are provided so as to be inserted into and drawn out from the LS I/F shelf 3-5.

The switch substrate X includes a switching section C4 and shift register 16 and the switch substrate Y includes a switching section C5 and shift register 16. Each of the shift register 16 and bit phase comparator 17 is provided in an intermediate portion of a signal path extending from the switching sections C4, C5 to the time slot exchanging sections 2-0, 2-1.

The shift register 16 delays the phase of a lower-order group signal (STM-1, STM-4, STM-16, STM-64) supplied from the tributary transmission line LL via the switching section C4 or switching section C5 in the bit unit before it is introduced into the time slot exchanging sections 2-0, 2-1. The phase delay amount of the shift register 16 can be changed by control of the control section 5.

The bit phase comparator 17 derives a frame phase difference between the lower-order group signal supplied via the shift register 16 and the reference frame pulse FP0 from the timing generating section 18 and notifies the result thereof to the control section 5.

Further, if the time slot exchanging sections 2-0, 2-1 are realized as substrates mounted on the transmission apparatuses N1 to Nn, it is more preferable to form the bit phase comparator 17 on the same substrate as the time slot exchanging sections 2-0, 2-1 from the viewpoint of distribution of the reference frame pulse FP0.

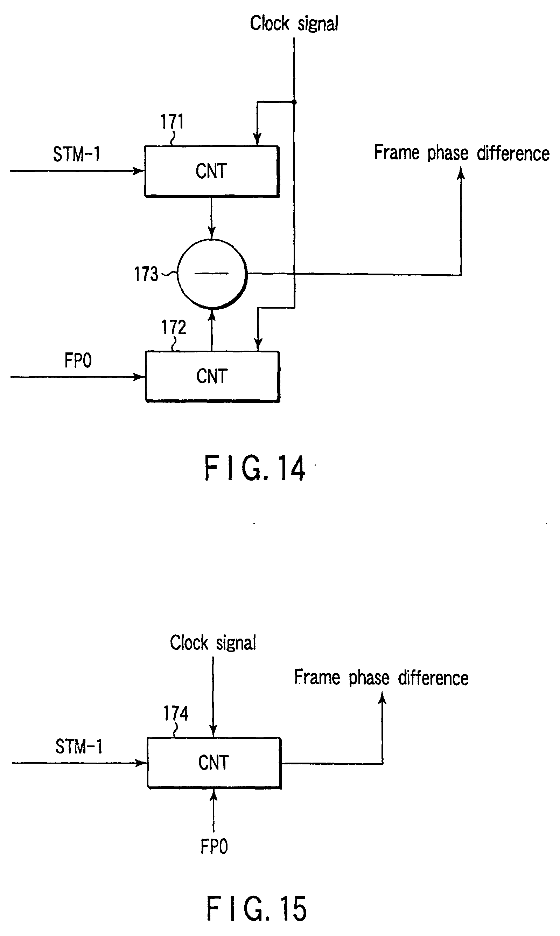

FIG. 14 shows an example of the construction of the bit phase comparator 17. The bit phase comparator 17 of FIG. 14 includes two digital counters (CNT) 171, 172 and a subtracter 173. The digital counter 171 is supplied with a lower-order group signal (which is STM-1 in this case). The digital counter 172 is supplied with the reference frame pulse FPO. Further, a clock signal output from the timing generating section 18 is input to each of the digital counters 171, 172.

The digital counter 171 counts the clock signal with respect to the starting point of the STM-1 frame. The digital counter 172 counts the clock signal from the reference frame pulse FP0. Then, the count values of both of the digital counters 171, 172 are input to the subtracter 173 and a difference between the two count values is notified to the control section 5 as a frame phase difference.

FIG. 15 shows another example of the construction of the bit phase comparator 17. The bit phase comparator 17 of FIG. 15 uses one digital counter (CNT) 174 to latch the clock count value from the frame head position of the lower-order group signal (STM-1) with the reference frame pulse FP0 and outputs the value as a frame phase difference.

Further, for the operation of the bit phase comparator 17, it becomes necessary to detect the frame head position of the lower-order group signal. In order to detect the frame head position of the lower-order group signal, it is sufficient to read a bit pattern of a frame synchronization byte (A1, A2 bytes) defined in the head portion of the STM frame format.

By the way, the control section 5 of this embodiment has the delay bit number setting means 5a. The delay bit number setting means 5a is to set the bit delay amount in the shift register 16 so as to make equal the phases of the lower-order group signals input to the time slot exchanging sections 2-0, 2-1 to one another based on the frame phase difference supplied from each of the bit phase comparators 17.

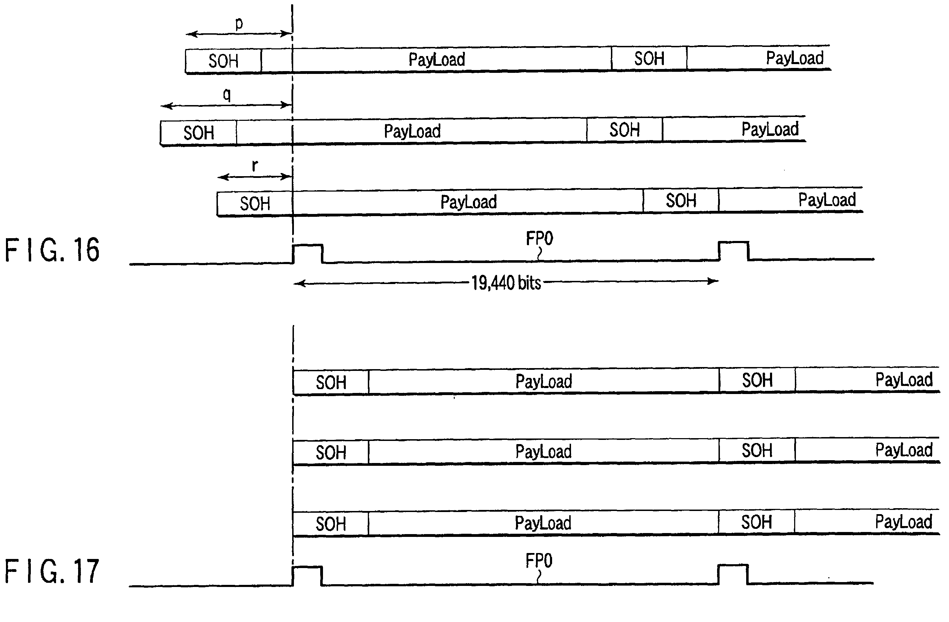

Next, the operation of the above construction is explained with reference to FIG. 16, FIG. 17. FIG. 16 is a diagram showing the state in which the phases of the lower-order group signals supplied from the LS I/F shelves 3-1 to 3-k to the time slot exchanging sections 2-0, 2-1 are shifted from each other.

In FIG. 16, it is assumed that the phase of the lower-order group signal is shifted by p bits, q bits, r bits with respect to the reference frame pulse FP0. If it is kept unchanged, it is necessary for the time slot exchanging sections 2-0, 2-1 to effect the process for making equal the phases of the lower-order group signals supplied from the LS I/F shelves 3-1 to 3-k. For this reason, the processing load and scale of the hardware for time slot exchanging sections 2-0, 2-1 becomes greater.

Therefore, in this embodiment, if the phase difference of p bits is present with respect to the reference frame pulse FP0, the STM-1 signal is further delayed by p bits. Likewise, if the phase differences of q bits, r bits are present, they are respectively delayed by q bits, r bits. By doing so, the phases of all of the lower-order group signals are set to match the reference frame pulse FP0 as shown in FIG. 17.

The above process is specifically realized as follows. Now assume that the STM-16 (SRV) substrate C1 is attached to the LS I/F shelf 3-5. Then, the control section 5 detects that the substrate C1 is mounted.

After this, if an STM-16 signal is introduced into the internal portion of the apparatus from the STM-16 (SRV) substrate C1, the phase difference of the STM-16 signal with respect to the reference frame pulse FP0 is calculated by the bit phase comparator 17. The calculated phase difference is notified from the bit phase comparator 17 to the control section 5.

Then, the delay bit number setting means 5a sets a phase delay amount based on the calculated phase difference in the shift register 16. The phase delay amount is set only once at the time of mounting of the substrate. After this, the LS I/F shelf 3-5 shifts the frame phase of the STM-16 signal according to the set bit delay amount and transmits the same to the time slot exchanging sections 2-0, 2-1.

Likewise, when another substrate is attached or expanded, a bit delay amount is individually set for each substrate.

Thus, in this embodiment, the bit phase comparators 17 are respectively provided in the signal paths of lower-order group signals extending from the LS I/F shelves 3-1 to 3-k to the time slot exchanging sections 2-0, 2-1 to detect the phase difference of each lower-order group signal with respect to the reference frame pulse FP0. Further, the shift registers 16 for shifting the phase of the lower-order group signal in the bit unit are respectively provided in the LS I/F shelves 3-1 to 3-k and the lower-order group signal is delayed based on the phase difference calculated in the succeeding-stage bit phase comparator 17.

That is, in this embodiment, the phases of the lower-order group signals are made equal to one another at the stage in which they are input to the time slot exchanging sections 2-0, 2-1 as described above. Further, the phase shift amount setting process is completed at the time of mounting or expansion of the tributary interface substrate.

Therefore, it becomes possible to make equal the bit phases of the lower-order group signals at the stage in which they are input to the time slot exchanging sections 2-0, 2-1 irrespective of the wiring length in the internal portion of the apparatus extending from the LS I/F shelves 3-1 to 3-k to the time slot exchanging sections 2-0, 2-1. This makes it unnecessary to consider, for example, setting the wiring lengths to the time slot exchanging sections 2-0, 2-1 to a constant length between the LS I/F shelves 3-1 to 3-k. As a result, each of the shelves and substrates can be freely arranged in the apparatus and a great advantage can be attained.

Further, the same merit can be attained in a case where the number of LS I/F shelves 3-1 to 3-k and the number of tributary interface substrates are changed according to enlargement of the scale of the apparatus. In short, this is because the phases of the tributary signals are made equal on the LS I/F shelves 3-1 to 3-k side. Therefore, it is possible to greatly enhance the degree of freedom in manufacturing the transmission apparatus.

Further, even if the accommodated speeds in the LS I/F shelves 3-1 to 3-k are different, the phases of signals output from the individual LS I/F shelves 3-1 to 3-k are automatically made equal so that interfaces of different speeds can be easily accommodated.

Further, since the process for making the phases of the lower-order group signals equal is automatically effected, it is not necessary to manually set the phase delay amount upon modification of the construction on the tributary-side. As a result, interfaces of various transmission speeds can be accommodated without complicating the operation of the device.

Further, in this embodiment, the shift register 16 is provided on each side of the LS I/F shelves 3-1 to 3-k. As a result, it becomes possible to reduce the line load on a portion associated, particularly, with the time slot exchanging sections 2-0, 2-1 in the internal portion of the transmission apparatus. As a result, a lightweight, minimized transmission apparatus becomes possible, while also reducing the cost.

Further, in this embodiment, it is sufficient to set the phase shift amount of the shift register 16 only once when the low-speed interface substrate is mounted. This is because the wiring length to the time slot exchanging sections 2-0, 2-1 is not dynamically changed after the tributary substrate is mounted. Therefore, control for monitoring the phases of a plurality of tributary signals and changing the phase shift amount of the shift register 16 on a real time basis is not necessary. Accordingly, the load of the processor of the control section 5 can be kept small.

Further, this invention is not limited to the second embodiment.

For example, in the second embodiment, the phase difference between the lower-order group signal from the tributary interface section and the reference frame pulse FP0 from the timing generating section 18 is detected by the bit phase comparator 17, but the following can be effected instead thereof. That is, the reference frame pulse FP0 distributed from the timing generating section 18 is transmitted from the LS I/F shelves 3-1 to 3-k to the bit phase comparators 17 on the downstream side thereof. In this case, the phase of the reference frame pulse FP0 reaching from each of the LS I/F shelves 3-1 to 3-k to the individual bit phase comparator 17 reflects the individual wiring length. The same effect as described above can be attained by calculating the phase difference between the pulse and the reference frame pulse FP0 directly introduced from the timing generating section 18 to the bit phase comparator 17.

Further, it is also very possible to apply the construction of the second embodiment to the construction of the first embodiment of this invention. In this case, it is sufficient to provide the shift register 16 and bit phase comparator 17 for each STM-1 signal after being de-multiplexed.

Further, the position of the shift register 16 and bit phase comparator 17 is not limited to FIG. 13. For example, the shift register 16 may be provided not on the LS I/F shelves 3-1 to 3-k side but in the internal portion of the transmission apparatus, for example, immediately before the bit phase comparator 16.

Further, in the second embodiment, an attempt was made to set equal the frame head position of the tributary signal transmitted from each of the LS I/F shelves 3-1 to 3-k to the time slot exchanging sections 2-0, 2-1 to the reference frame pulse FPO. This is not limited, and it is permissible to provide a bit interval of a preset value between the reference frame pulse FP0 and each of the tributary signals. In short, the object of this invention can be attained if the phases of the respective tributary signals are made equal to each other in the stage before the tributary signals are introduced into the time slot exchanging sections 2-0, 2-1.

Further, those portions which perform analog operations are used for the shift register 16 and bit phase comparator 17 and it becomes necessary to convert the phase delay amount due to the wiring length to a bit delay amount depending on the type of device in some cases. In such a case, it is possible to previously store a bit delay amount table 6a for converting the phase delay amount in the bit unit in the storage section 6 of FIG. 12, FIG. 13 and control the delay amount in a software fashion by use of the table.

In addition, the embodiments can be variously modified without departing from the scope of this invention.

### Industrial Applicability

As described above, according to this invention, it is possible to provide a transmission apparatus and tributary interface substrate capable of accommodating interfaces of various transmission speeds without causing complexity of the internal processing in the transmission apparatus and complexity of the manual operation.

From the above standpoint, this invention is effective in the technical field relating to an optical submarine cable system, particularly, the technical field relating to a network which is in conformity with SDH/SONET.

## Claims

1. In a transmission apparatus connected to a tributary line for transmitting lower-order group signals and a line cable for transmitting higher-order group signals having the lower-order group signals multiplexed,
the transmission apparatus **characterized by** comprising:
a line interface section connected to the line cable;
exchanging means for switching a signal transmitted via the tributary line and a signal transmitted via the line cable with a minimum unit used when the lower-order group signals are multiplexed into the higher-order group signal; and
a plurality of tributary interface sections connected to the tributary line and provided according to the transmission speed of a signal transmitted via the tributary line connected to itself;
wherein said tributary interface section includes de-multiplexing means for de-multiplexing a signal received via a tributary line having a transmission speed which is N times (N is a natural number not smaller than 2) the minimum unit in a case where the tributary line is connected, creating N-system signals each having the basic transmission speed and transmitting the same to said exchanging means.

2. The transmission apparatus according to claim 1, **characterized by** comprising a tributary interface shelf provided between the tributary line and said exchanging means and connected to the tributary line; and
a tributary interface substrate inserted into and drawn out from said tributary interface shelf and connected to the tributary line; and **characterized in that** said de-multiplexing means is mounted on said tributary interface substrate.

3. A tributary interface substrate which is a tributary interface substrate mounted and used on a transmission apparatus for creating a higher-order group signal by multiplexing lower-order group signals, **characterized by** comprising:
de-multiplexing means for de-multiplexing a signal received via a tributary line having a transmission speed which is N times (N is a natural number not smaller than 2) a minimum unit used when the lower-order group signals are multiplexed into the higher-order group signal in a case where the tributary line is connected to itself and creating N-system signals each having the basic transmission speed.

4. A transmission apparatus which is a transmission apparatus used in a synchronous multiplex transmission system and connected to a plurality of tributary lines and a line cable in which signals transmitted via the tributary lines are multiplexed, **characterized by** comprising:
a plurality of tributary interface means respectively connected to the plurality of tributary lines;
exchanging means for switching a signal transmitted via the tributary line and a signal transmitted via the line cable;
timing generating means for generating a reference frame pulse based on a synchronous clock used in the synchronous multiplex transmission system;
a plurality of phase comparing means provided in respective signal routes via which signals received by said plurality of tributary interface means are input to said exchanging means, for deriving phase differences of the individual received signals with respect to the reference frame pulse supplied from said timing generating means; and
phase control means for respectively controlling phases of the respective received signals based on the phase differences derived in said phase comparing means provided in the signal routes of the received signals to set the frame phases of the signals input from said plurality of tributary interface means to the exchanging means equal to one another.

5. The transmission apparatus according to claim 4, **characterized by** comprising phase control amount setting means for fetching the phase differences derived by said phase comparing means and setting a phase control amount in said phase control means lying on the upstream side of said phase comparing means of a fetching destination to a fixed value based on the fetched values when the tributary interface means having the phase control means is mounted.

6. The transmission apparatus according to claim 4, **characterized in that** said phase comparing means includes:
a first counter supplied with the received signal, for counting a bit number from a frame head position of the received signal;
a second counter supplied with the reference frame pulse, for counting a bit number from a variation point of the reference frame pulse; and
a subtracter for subtracting the bit numbers counted by said first and second counters from each other to derive the phase difference.

7. The transmission apparatus according to claim 4, **characterized in that** said phase comparing means includes:
a counter supplied with the received signal and reference frame pulse, for latching a bit number from a frame head position of the received signal at a variation point of the reference frame pulse to derive the phase difference.

8. A tributary interface substrate which is a tributary interface substrate mounted and used on a transmission apparatus connected to a plurality of tributary lines and a line cable in which signals transmitted via the tributary lines are multiplexed, **characterized by** comprising:
phase control means for controlling a phase of the received signal based on a phase difference derived in the phase comparing means provided in a signal route on the downstream side thereof to set the frame phase of the signal received via the tributary line connected to itself equal to another tributary interface substrate.
